# EUROPEAN PATENT SPECIFICATION

(11) **EP 2 976 759 B1**
(45) Date of publication and mention of the grant of the patent: **05.05.2021**
(21) Application number: 13879101.7
(22) Date of filing: 21.03.2013
(51) Int. Cl.: H04W 4/38, G06F 16/22, H04W 4/40, G06F 21/44, H04Q 9/00, H04W 12/06, G06Q 30/02

(54) **METHOD, COMPUTER PROGRAM AND NODE FOR DISTRIBUTION OF SENSOR DATA**
VERFAHREN, COMPUTERPROGRAMM UND KNOTEN ZUR VERTEILUNG VON SENSORDATEN
PROCÉDÉ, PROGRAMME D'ORDINATEUR ET NOEUD POUR UNE DISTRIBUTION DE DONNÉES DE CAPTEUR

(43) Date of publication of application: 27.01.2016
(73) Proprietor: Telefonaktiebolaget LM Ericsson (publ), 164 83 Stockholm (SE)
(72) Inventor: NYBERG, Marcus, S-12637 Hägersten (SE); ANNEROTH, Mikael, S-18246 Enebyberg (SE)
(74) Representative: Ericsson
(86) International application number: PCT/SE2013/050312
(87) International publication number: WO 2014/148959

(56) References cited:
- EP-A1- 2 466 524
- US-A1- 2011 103 583
- US-A1- 2012 109 851
- US-A1- 2012 109 851
- US-A1- 2013 066 688
- Tingxin Yan ET AL: "Demo Abstract: mCrowd -A Platform for Mobile Crowdsourcing", , 4 November 2009 (2009-11-04), XP055139149, Retrieved from the Internet: URL:http://delivery.acm.org/ [retrieved on 2014-09-09]
- NICOLAS HADERER ET AL: "A preliminary investigation of user incentives to leverage crowdsensing activities", 2013 IEEE INTERNATIONAL CONFERENCE ON PERVASIVE COMPUTING AND COMMUNICATIONS WORKSHOPS (PERCOM WORKSHOPS), 18 March 2013 (2013-03-18), pages 199-204, XP055251051, DOI: 10.1109/PerComW.2013.6529481 ISBN: 978-1-4673-5076-1
- Luis Gabriel Jaimes: "A Location-Based Incentive Mechanism for Participatory Sensing Systems with Budget Constraints", Graduate Theses and Dissertations, 1 January 2012 (2012-01-01), XP055251018, University of South Florida Retrieved from the Internet: URL:http://scholarcommons.usf.edu/cgi/view content.cgi?article=5283&context=etd [retrieved on 2016-02-17]
- QINGHUA LI ET AL: "Providing privacy-aware incentives for mobile sensing", PERVASIVE COMPUTING AND COMMUNICATIONS (PERCOM), 2013 IEEE INTERNATIONAL CONFERENCE ON, IEEE, 18 March 2013 (2013-03-18), pages 76-84, XP032420698, DOI: 10.1109/PERCOM.2013.6526717 ISBN: 978-1-4673-4573-6
- Deepak Ganesan ET AL: "Crowdsourcing for Large-Scale Pervasive Sensing", NSF Workshop on Pervasive Computing at Scale (PeCS), 27 January 2011 (2011-01-27), XP055251010, University of Washington Seattle,WA Retrieved from the Internet: URL:http://sensorlab.cs.dartmouth.edu/NSFP ervasiveComputingAtScale/pdf/1569392897.pd f [retrieved on 2016-02-17]

## Description

### Technical field

The present disclosure relates generally to a method, a computer program and a sensor data exchange node in a communication network for enabling distribution, and rewarding of sensor data in the communication network. The disclosure also relates to a computer program, a UE and a method in a UE in a communication network for enabling distribution, and rewarding of sensor data.

### Background

There are more and more sensors located in the society. The sensors are fixed installed or mobile. The sensors, both fixed and mobile, may be attached to some kind of device, for example a User Equipment, UE such as a mobile handset. The data that a sensor may provide may be of interest for various parties. An example is in a catastrophe situation, where the society and public organizations quickly needs to get various sensor data. Another example is in a situation with nuclear emission, where it might be important to chart radiation distribution. Another example is in a situation with large scale wildfires, where it might be desired to understand levels of smoke and dust locally in the air.

From a planning perspective it is desired to understand local sensor reading over time at various geographical points. A city may want to understand dust or noise pollution levels over time, in order to be able to take preventive actions before the pollution exceeds acceptable thresholds. From an academic research perspective, it may also be useful to be able to acquire data from sensors, in order to study the data and possibly to make conclusions based on relations to other factors in the society.

There are different industrial sectors that may benefit of data from sensors. An example is weather forecasting companies, who seem to have an always increasing preference for data. Modem cars have a number of sensors in the car, for surveillance of various systems as well as for assisting driving. The data from the car mounted sensors may be of interest, in order to develop better cars in the future. In a case where the ABS (Anti Break System) or anti-spin system is activated for many cars in a region at a certain time, it could with such information be wise to take preventive actions for deicing and thereby possibly avoid a serious accident.

However, it is today problematic for cities or authorities representing cities to capture data from sensors, which is outside their own ownership, especially data from sensors owned by individuals. Another problem is that individuals may have sensors built in their mobile phone, or connected to their mobile phone, but if an individual provides a particular information, she or he may not want to disclose the personal identity for any receiver of the sensor information.

An individual liberally sharing sensor data, may want to control the usage of sensor data and limit the usage to only good and deserving purposes. It is a problem today to set such limitations, to provided sensor data. Different individuals may have different preferences or motives for sharing data and different individual may prefer or require completely different incentives or compensations. It is a problem today to handle different types of incentives.

Some individuals may freely provide sensor data which may contribute to a sustainable city or a more environmental society, while other individuals may only provide sensor data for monetary compensation but not care about the usage. It is a problem to handle the different individuals incentive opinions for providing sensor data, compensation handling, and limitations of usage of sensor data.

NICOLAS HADERER ET AL: "A preliminary investigation of user incentives to leverage crowdsensing activities," 2013 IEEE International Conference on pervasive computing and communications workshops (PERCOM WORKSHOPS), 18 March 2013 (2013-03-18), pages 199-204, describes a report on APISENSE platform, a participative platform that help scientists to collect realistic datasets from a population of voluntary participants.

Luis Gabriel Jaimes: "A Location-Based Incentive Mechanism for Participatory Sensing Systems with Budget Constraints," Graduate Theses and Dissertations, 1 January 2012 (2012-01-01), XP055251018, University of South Florida, addresses two fundamental challenges in the design of incentive mechanisms for participatory sensing: make the system economically feasible from an economical point of view and guarantee the area coverage.

QINGHUA LI ET AL: "Providing privacy-aware incentives for mobile sensing," Pervasive computing and communications (PERCOM) 2013 IEEE International Conference on, IEEE, 18 March 2013 (2013-03-18), pages 76-84, describes two privacy-aware incentive schemes for mobile sensing to promote user participation. These schemes allow each mobile user to earn credits by contributing data without leaking which data it has contributed, and at the same time ensure that dishonest users cannot abuse the system to earn unlimited amount of credits.

### Summary

It is an object of the invention to address at least some of the problems and issues outlined above. It is possible to achieve these objects and others by using a method and an apparatus as defined in the attached independent claims.

According to one aspect, a method is provided in a sensor data exchange node in a communication network for enabling distribution, and rewarding of sensor data in the communication network. The method comprises receiving sensor data from a UE. The method comprises transmitting the sensor data to a data processing node. The method comprises receiving a value assessment of the sensor data from the data processing node. The method comprises determining a reward based on the received value assessment by a reward unit. The method comprises storing the determination of the reward in a reward database.

According to another aspect, a sensor data exchange node is provided in a communication network configured to enable distribution, and rewarding of sensor data in the communication network. The node comprises a UE interface configured to receive sensor data from a UE. The node comprises a data processing interface configured to transmit the sensor data to a data processing node. The data processing interface is configured to receive a value assessment of the sensor data from the data processing node. The node comprises a reward unit configured to determine a reward based on the received value assessment. The node comprises a reward database configured for storage of the determination of the reward or a transmitting unit arranged for transmitting the determination to a storage.

According to another aspect, a vehicle or vessel is provided, containing the sensor data exchange node.

According to another aspect, a UE is provided in a communication network configured to enable distribution, and rewarding of sensor data. The UE comprises a sensor interface configured to receive sensor data from a sensor. The UE being identifiable via an ID. The UE comprises a tagging unit configured to tag the received sensor data with the ID. The UE comprises an exchange node interface configured to transmit the received sensor data to a sensor data exchange node.

According to another aspect, a method is provided in a UE in a communication network for enabling distribution, and rewarding of sensor data. The method comprises receiving sensor data from a sensor. The method comprises the UE being identifiable via an ID. The method comprises tagging the received sensor data with the ID. The method comprises transmitting the received sensor data to a sensor data exchange node.

According to another aspect, a vehicle or vessel is provided, containing a UE according to above.

According to another aspect, a computer program is provided comprising computer readable code which, when run on a sensor data exchange node, causes the sensor data exchange node to behave as the sensor data exchange node.

According to another aspect, a computer program product is provided comprising a computer program comprising computer readable code. The computer program, which when run on a sensor data exchange node, causes the sensor data exchange node to behave as the sensor data exchange node.

According to another aspect, a computer program is provided comprising computer readable code which, when run on a UE, causes the UE to behave as a UE according to above.

According to another aspect, a computer program product is provided comprising a computer program comprising computer readable code which, when run on a UE, causes the UE to behave as a UE according to above.

The above methods, node, UE and computer programs may be configured and implemented according to different optional embodiments. In one possible embodiment, the sensor data may include information authenticating the UE, wherein the received sensor data may be tagged with an ID, the ID being associated with the UE, wherein the authentication may be based on the ID. The ID may be a unique identifier identifying a subscription and a method of rewarding, and the association between the ID and the subscription may be stored in an association database. In one possible embodiment, the tag of the sensor data may comprise a marking such that the use of the sensor data becomes traceable enabling a subscriber to trace the use and deployment of the sensor data. In one possible embodiment, the tag and the sensor data may be watermarked, such that the authenticity of the tag, the sensor data and the traceability can be verified by the subscriber. In one possible embodiment, the reception of sensor data may be preceded of at least one of: request for specific sensor data by the data processing node, and offer of specific sensor data, the offer received from the subscriber via a subscription interface. In one possible embodiment, the solution may comprise validating the received sensor data, and storing meta information related to sensor data.

In one possible embodiment, a transmission condition may be applied to received sensor data, limiting transmission of sensor data to at least one data processing node in an identified group of data processing nodes, which transmission condition has to be fulfilled to transmit the data to the data processing node or, limiting transmission of sensor data to at least one usage type in an identified group of usage types of sensor data, wherein the transmission condition is indicated at the reception of the sensor data, or indicated in said acceptance stored in the association database. In one possible embodiment the reward may be determined by a reward unit based on the value assessment and at least one of: frequency of usage the sensor data, importance of the sensor data, uniqueness of the sensor data and effect of the sensor data. In one possible embodiment the solution may comprise receiving a tracking request from the UE or via a subscription interface, responding to the tracking request by sending information indicating usage of sensor data, used by the data processing nodes, and transmitting information indicating deployment or further transmission of the sensor data. In one possible embodiment the solution may comprise transmitting a message to a receiver identified through the ID, the message indicating a reward availability.

Further possible features and benefits of this solution will become apparent from the detailed description below.

### Brief description of drawings

The solution will now be described in more detail by means of exemplary embodiments and with reference to the accompanying drawings, in which:
Fig. 1 is a block diagram illustrating a sensor data exchange node, according to some possible embodiments.
Fig 2 is a flow chart illustrating a procedure in a sensor data exchange node, according to possible embodiments.
Fig. 3 is a flow chart illustrating a procedure in a sensor data exchange node, according to further possible embodiments.
Fig. 4 is a block diagram illustrating a sensor data exchange node in more detail, according to further possible embodiments.
Fig. 5A is diagram illustrating the solution, according to some possible embodiments in a vehicle.
Fig. 5B is diagram illustrating the solution, according to some possible embodiments in a vessel.
Fig. 6 is a block diagram illustrating a user equipment, according to some possible embodiments.
Fig. 7 is a block diagram illustrating embodiments of the solution in a shared environment

### Detailed description

Briefly described, a solution is provided to enable individuals owning user equipment, with sensors connected to the user equipment, to provide data from the sensors to different users of sensor data. Some individuals may share their sensor data freely, some individuals may sell their sensor data to the company paying the most for it. Some users may be prepared to share sensor data, but only share the data with organizations of a certain mission or focus.

An advantage with the proposed solution is that the solution allows individuals to provide sensor data or offer to provide sensor data in a controlled manner, from the individual's perspective. The individual may want to follow up how and by whom the provided sensor data has been used. The individual may further have a desire to be anonymous.

A research project may need sensor data for resolution of human needs. The research project may only be capable of offering a "thank you" in good faith in return to individuals providing sensor data. A public service organization, like an authority of a city may as well need sensor data, but may in turn be able to offer for example discount on public transportation to the individual providing sensor data. A private company may offer to buy sensor data continuously or on a demand basis.

The proposed solution may enable individuals owning UEs with sensors connected to respective UE, to provide sensor data and in exchange benefit to a sustainable city development, get services or entertainment from the city, or monetary compensation. The proposed solution may further enable individuals to track and control usage of provided sensor data for whatever reason and in such a way that an individual if desired is kept anonymous. The proposed solution may further provide a way for organizations, public or private, to find various sensor data through a single relation instead of necessarily establishing relations with all individuals.

A UE (User Equipment) may be a mobile phone, PDA (Personal Digital Assistant), personal computer, not limiting other types of personal devices. A UE may also be a kind of gateway. Examples of such a gateway are: ADSL-router (Asynchronous Digital Subscriber Line), FTTH-switch/router (Fiber-To-The-Home), wireless router (GSM/3G/LTE - Global System for Mobile Communications/ Third Generation/ Long Term Evolution), Ethernet switch, wireless LAN router (local area network), or a network router, not limiting to other types of gateways.

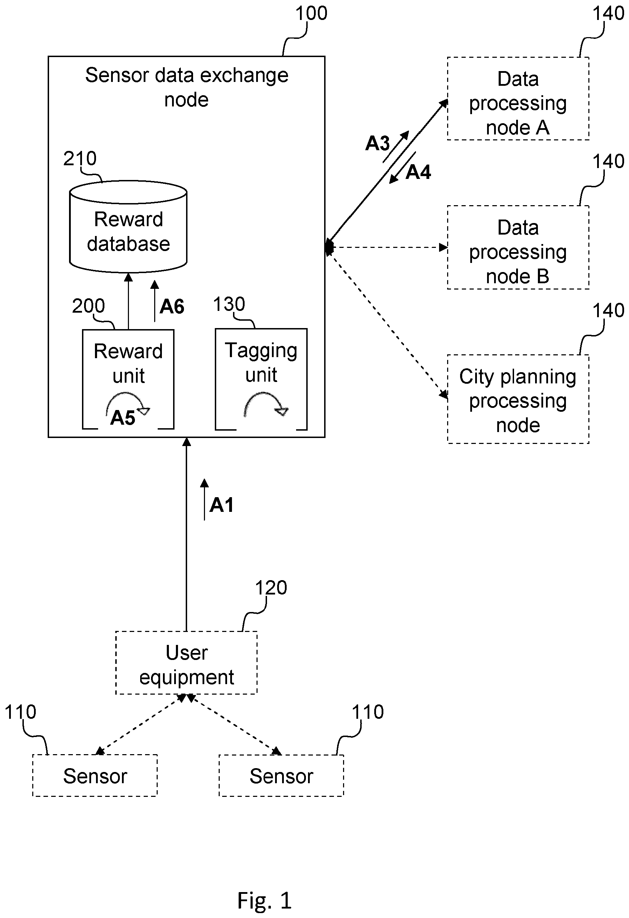

Now the solution will be described in more detail. Fig. 1 shows a sensor data exchange node 100, comprising a reward unit 200 and a reward database 210. Sensors 110 are connected to a UE 120, and the UE 120 is arranged to transmit sensor data to the sensor data exchange node 100. The sensor data exchange node 100 is arranged to transmit the sensor data to a data processing node 140 and in return receive a value assessment.

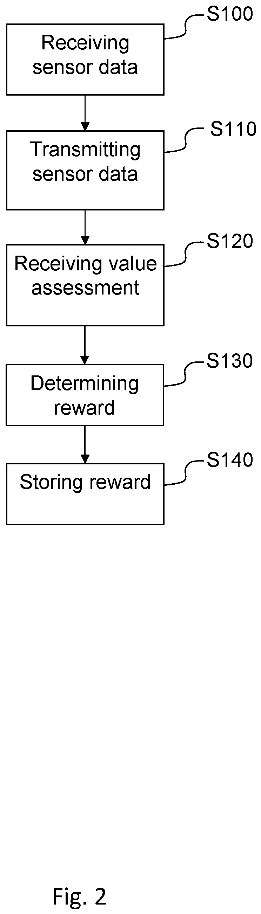

Fig. 2 shows a flow chart illustrating an embodiment of a procedure of the solution comprising a method in a sensor data exchange node 100 in a communication network for enabling distribution and rewarding of sensor data in the communication network. The method comprises receiving **S100** sensor data from a UE 120. The method may comprise that the received sensor data is tagged with an ID, where the ID is associating the sensor data with the UE (120) from which the sensor data was received. The method comprises transmitting **S110** the sensor data to a data processing node 140. The method comprises receiving **S120** a value assessment of the sensor data from the data processing node 140. The method comprises determining **S130** a reward based on the received value assessment by a reward unit 200 and storing **S140** the determination of the reward in a reward database 210.

Sensor data may be data from a sensor directly connected to or integrated with a UE 110. Examples of such sensors are: microphone, GPS (Global Positioning System), accelerometer, camera, and similar sensors that normally are integrated with a UE. Sensor data may also be data from sensors communicating with the UE 110. Examples of such sensors are: wind speed meter, temperature meter, wind direction meter, rain meter, particle sensor, camera, radar, power meter, switch detection sensor, radiation meter, nuclear radiation meter, and similar sensors that are located in individuals vicinity and normally are capable of communicating sensor data, not limiting sensor data to be provided by other types of sensors providing other types of data.

The communications network may be a local network in a home, a local real estate network, a private network, an enterprise network, an operator network, the Internet, not limiting to similar types of networks. A data processing node may be a node owned by or located with a city administration, other type of public service organization, a research organization or a university, nonprofit organization, commercial company, or a node part of a network operator services platform.

The value assessment may be a plain confirmation of received sensor data. Other examples of value assessments are: uniqueness, usage frequency, monetary value, accuracy of data, resolution of data, type of data, not limiting to other types of value assessments. A reward may be representing a physical thing, intangible object, a service, monetary compensation, not limiting a reward to represent other similar or suitable compensations in return for sensor data.

The reward database, such as the reward database 200, may be a simple text file, a record, a table, a relational database, an ERP-system (Enterprise Resource Planning), or a business system, not limiting to similar systems suitable for storing a reward or the determination of a reward. The determination of the reward may be stored outside the sensor data exchange node 100. The determination of the reward may be stored in an external database. The determination of the reward may be stored in a database which is shared with other information. The determination of the reward may be stored in a cloud type of service, not limiting other types of external storage of the determination of the reward.

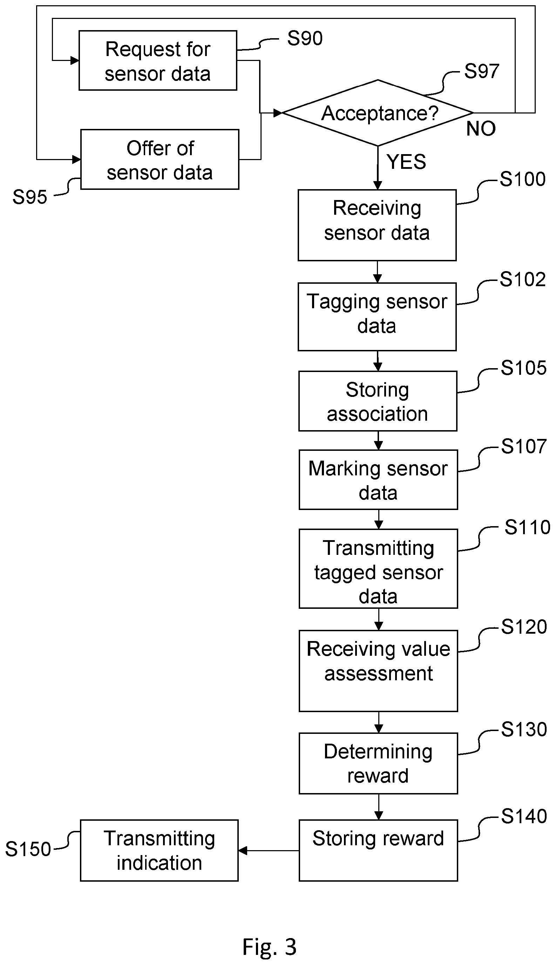

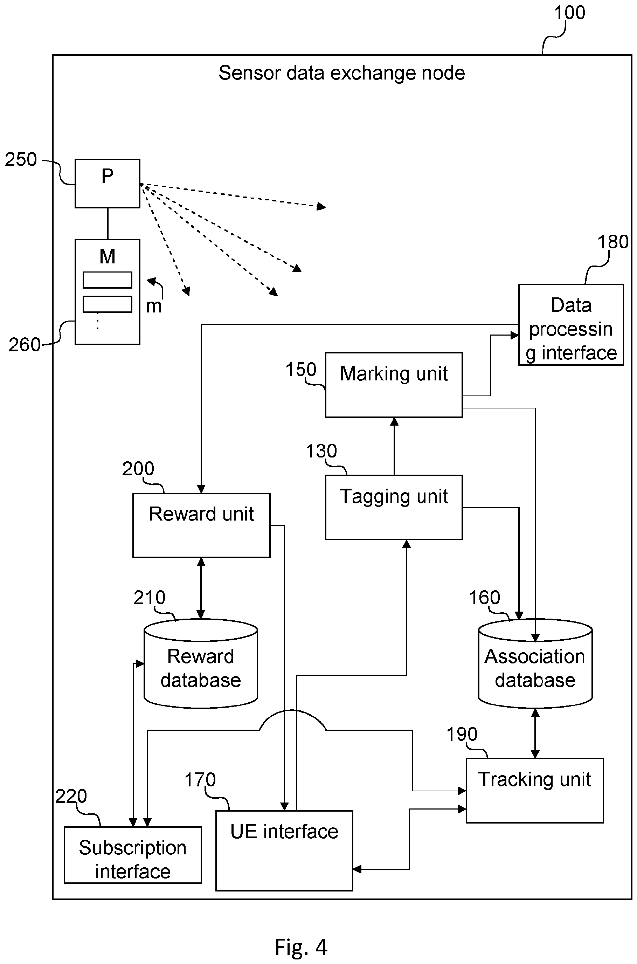

Now looking at Fig. 3, which shows a flowchart illustrating further possible embodiments of a procedure in sensor data exchange node, such as the sensor data exchange node 100. References in Fig. 2 and Fig. 3 are indicating similar or the same activities or procedure steps, illustrated in both figures. References to functional units are further described in Fig. 4 to 7.

In an embodiment the method may comprise that the sensor data includes information to authenticate the UE 120. The ID may be associated with the UE 120. The ID may be provided by the UE 120.The ID may be a unique identifier identifying a subscription and a method of rewarding. The association between the ID and the subscription may be stored S105 in an association database 160. The ID may be for example a phone number, a SIM identity (Subscriber Identity Module), a MAC-address (Media Access Control), an e-mail address, or an IP-address (Internet Protocol). However, the ID may also be an ID created by the sensor data exchange node 100, such that it not is directly derivable by a third party from which UE 120 or individual a sensor data is provided.

The subscription may be a subscription associated with a mobile telephony subscription, a mobile data subscription, a fixed line telephony subscription, a fixed line data subscription (asymmetric digital subscriber line, fiber to the home, etc), an Internet service subscription, or any other similar type of computer based service subscription, including pre paid type of subscriptions.

In an embodiment the tag of the sensor data may comprise a marking **S107** such that the use of the sensor data becomes traceable enabling a subscriber to trace the use and deployment of the sensor data. The marking may ensure that a user may follow the sensor data and potentially trace and see where and how the sensor data has been used.

In an embodiment the tag and the sensor data may be watermarked, such that the authenticity of the tag, the sensor data and the traceability can be verified. By use of a watermark, it may be possible for a data processing node 140 to verify authenticity of sensor data. The use of a watermark also increase reliability for a user that has provided the sensor data that the sensor data, the ID or the marking not are manipulated of removed. There may be different procedures for watermarking of sensor data. An example is by use of hash algorithms and hash lookup tables. Another example is by encryption of the sensor data and provision of an adopted key for reading of the data.

In an embodiment the reception of sensor data may be preceded of at least one of; request for specific sensor data **S90** by the data processing node 140, and offer of specific sensor data **S95.** The offer may be received from the subscriber via a subscription interface 220. The method may further comprise storing an acceptance **S97** of the request or offer in the association database 160, or other suitable databases for storing an acceptance. In a situation where a data processing node 140 has a need for sensor data or a particular sensor data, the data processing node 140 may communicate such a need by the request. A few illustrating examples: A city planning organization may want to collect noise in a certain area at specific time periods, e.g. at Friday and Saturday nights, and may ask city walkers for recordings. A police organization may need pictures from a crime scene and may ask the public for pictures. Another example is temperature readings at a certain geographical point over a certain time period. Thereby may a subscriber having the sensor data and responding to the request. A subscriber who have collected or is about to collect sensor data or a particular sensor data, may offer such sensor data via the subscription interface 220. Thereby may a data processing node 140 respond to the offer. A few illustrating examples of the acceptance may include, terms for the acceptance such as the time period for which the acceptance is valid, any limitations of distribution, any limitations for usage, warranties for sensor data accuracy, reward schema, not limiting to other content of an acceptance. An acceptance may be applicable between a single subscriber and a single data processing node 140, or a group of subscribers or group of data processing nodes 140, other combinations.

In an embodiment, the received sensor data is validated and meta information is stored related to the sensor data. Validation of sensor data may for example comprise a check that the probability that the sensor data is correct, possibly by comparing with other sensor data. A check may be performed of the transmitter of sensor data, such that a third party not may introduce false sensor data. Other check may as well be performed to validate sensor data. Meta information related to sensor data may be the time for a particular reading of sensor data, the location for a particular reading of sensor data, the ID, type of sensor that has collected the sensor data, an identity of the sensor, not limiting to other types of meta information.

In an embodiment, a transmission condition may be applied to received sensor data, limiting transmission of sensor data to at least one data processing node 140 in an identified group of data processing nodes 140. The transmission condition may need to be fulfilled to transmit the data to the data processing node 140 or, may be limiting transmission of sensor data to one usage type in an identified group of usage types of sensor data. The transmission condition may be indicated at the reception of the sensor data, or may be indicated in said acceptance stored in the association database. Thereby, a subscriber may be enabled to control, for example, to which data processing node 140 a sensor data is distributed to, or the purpose of the sensor data. The incentives to share sensor data among subscribers may vary, therefore it may be desired to be able to control the receiver of sensor data, or how sensor data is supposed to be used. A group of subscribers may for example only want to contribute with sensor data that supports city planning. Another group of subscribers may prefer to favor one data processing node 140 over another data processing node 140. Another example is where a sensor is located in a car or a vessel, transmission of sensor data may be limited to a data processing node 140 owned by the manufacturer of the car or vessel. A continuation of the example may be where the car or vessel is involved in an accident, a transmission condition may temporary allow sensor data to be transmitted to a data processing node 140 owned by police or an insurance company.

In an embodiment the reward may be determined **S130** by a reward unit 200 based on the value assessment and at least one of: frequency of usage the sensor data, importance of the sensor data, uniqueness of the sensor data and effect of the sensor data. Subscriber's willingness to contribute or enable contribution of sensor data may be dependent on fair rewarding. Further may owners of data processing nodes 140 evaluate sensor data different. By determining the reward based on the value assessment from the data processing node 140, the subscriber may be rewarded for the already contributed sensor data. Further may the subscriber be motivated to continue contributing with sensor data, or to contribute with other sensor data.

In an embodiment a tracking request may be received from the UE 120 or via a subscription interface 220 by a subscriber. The tracking request may be responded to by sending information indicating usage of sensor data, used by the data processing nodes 140. When sensor data is deployed or further transmitted, information about further transmission or deployment of sensor data may be transmitted to the UE120 or the subscriber via the subscription interface 220.

In an embodiment a message may be transmitted **S150** to a receiver identified through the ID. The message may indicate that a reward is available. Subscribers may provide sensor data from sensors 110 connected to their UE 120 for various reasons. It may be by non-profit motives, where the reward may be symbolic. Contribution of sensor data may be for a better city or society, where the reward may be in terms of subsidized city services like museum, theater entrance or public transportation. Where in a case with a commercial corporation, subscribers may prefer the reward in form of monetary compensation for sensor data. The reward may be drawn from the reward database 210. However, the reward may also be handled elsewhere in a separate system, where the message indicating the reward availability, just is an indicator to go and collect the reward, or a notification that the reward is coming.

In an embodiment the reward may be a virtual currency. The virtual currency may be used in exchange for public service, or in exchange for reception of symbolic items like a diploma or a mark or emblem, or the virtual currency may be exchanged to a real currency. How a provider of sensor data use the virtual currency may be determined at the moment of exchange of the virtual currency to something else.

Fig. 4 shows an illustrative example of a sensor data exchange node 100.

In an embodiment the sensor data exchange node 100 in a communication network, is configured to enable distribution, and rewarding of sensor data in the communication network. The node comprises a UE interface 170 configured to receive sensor data from a UE 120. The received sensor data may be tagged with an ID, where the ID is associating the sensor data with the UE 120 from which the sensor data was received. The node further comprises a data processing interface 180 configured to transmit the sensor data to a data processing node 140. Where the data processing interface 180 configured to receive a value assessment of the sensor data from the data processing node 140. The node further comprises a reward unit 200 configured to determine a reward based on the received value assessment, and a reward database 210 configured for storage of the determination of the reward.

In an embodiment a tagging unit 130 may be configured to tag the received sensor data with an ID, the ID being associated with the UE 120. The ID may be a unique identifier identifying a subscription and a method of rewarding.

In an embodiment the tag of the sensor data may comprise a marking, such that the use of the sensor data becomes traceable enabling a subscriber to trace the use and deployment of the sensor data. The marking may be performed by a marking unit 150. The traceability may enable a subscriber to follow up, such that a data user has used the received sensor data according to provided usage. If a subscriber traces and finds that the sensor data has been misused, or used in another way than agreed, the subscriber may stop the possibility to transmit the sensor data to that particular data processing node 140.

In an embodiment the tag and the sensor data may be watermarked, such that the authenticity of the tag, the sensor data and the traceability may be verified by the subscriber. The watermarking may be performed by the marking unit 150.

In an embodiment the reception of sensor data may be preceded of at least one of; request for specific sensor data by the data processing node 140, and offer of specific sensor data. The offer may be received from the subscriber via a subscription interface 220. Examples of a subscription interface 220, may be an API (application programming interface), web API, mobile application API, database API, a web interface, not limiting the subscription interface 220 to other similar interfaces.

In an embodiment the tagging unit 130 may be configured to validate the received sensor data. The tagging unit 130 may store meta information related to sensor data in the association database (160). Meta information may also be stored in a dedicated meta information database, or generic database for a sensor data exchange node 100, a or a generic database. Meta information may as well be stored in a data base external to the sensor data exchange node 100.

In an embodiment a transmission condition may be applied to received sensor data. The transmission condition may limit transmission of sensor data to at least one data processing node 140 in an identified group of data processing nodes 140. The transmission condition may need to be fulfilled to transmit the data to the data processing node 140. The transmission condition may limit transmission of sensor data to one usage type in an identified group of usage types of sensor data. The transmission condition may be indicated at the reception of the sensor data, or indicated in the acceptance stored in the association database 160.

In an embodiment the reward may be determined by a reward unit 200 based on the importance assessment and at least one of: frequency of usage the sensor data, importance of the sensor data, uniqueness of the sensor data and effect of the sensor data. Examples of frequency of usage are where a data processing node 140 uses a particular sensor data a number of times, or where a particular sensor data is used by a number of different data processing nodes 140, or a combination there of, not limiting other ways of measuring frequency of usage.

Uniqueness of sensor data may be exemplified by a situation where approximately the same temperature from approximately the same time and place, provided by a number of sensors may not be so unique and therefore may each sensor data not be so important. However in a situation where a single sensor has recorded, e.g. a picture of high public interest, that single sensor data may be considered of high importance. The importance assessment may vary over time.

In an embodiment a tracking unit 190 may be configured to receive a tracking request from the UE 120 or via a subscription interface 220, not limiting to receive tracking requests via other ways. The tracking unit 190 may further be configured to respond to the tracking request by sending information indicating usage of sensor data, used by the data processing nodes 140. The tracking unit 190 may further be configured to transmit information indicating deployment or further transmission of the sensor data.

In an embodiment a reward unit 200 may be configured to transmit a message to a receiver identified through the ID, the message may indicate that a reward may be available.

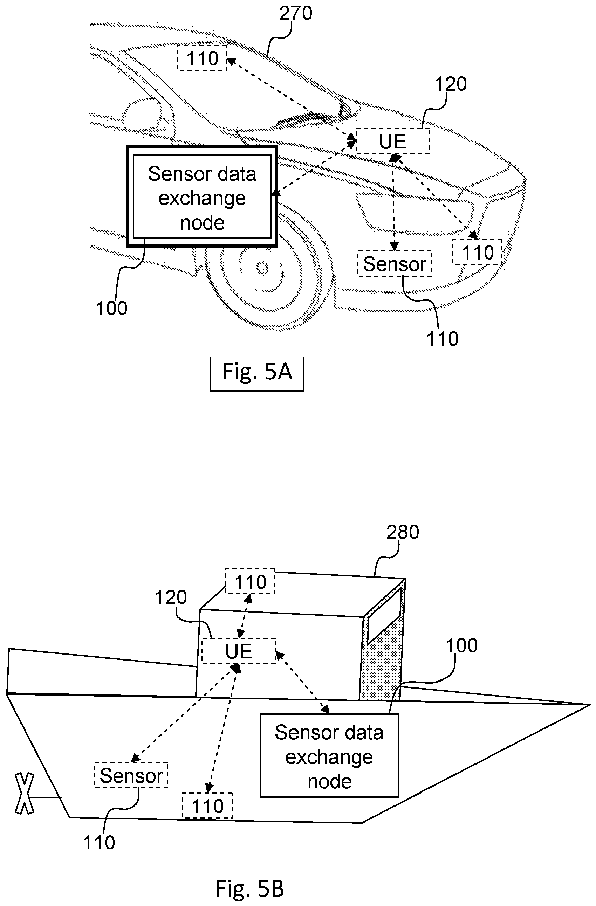

Fig. 5A and Fig. 5B illustrates a vehicle respective a vessel. In an embodiment a vehicle 270 or vessel 280 may contain the sensor data exchange node 100. The vehicle 270 or vessel 280 may contain at least one UE 120. The vehicle 270 or vessel 280 may contain at least one sensor 110. Other combinations are also possible. Vehicles today contain a range of different sensors. Some examples are: accelerometer, gyroscope (used for yaw rate and linear and lateral acceleration) temperature sensors (intake air, inside air, and fuel), position sensor (including but not limited to GPS and enhanced GPS positioning techniques), vehicle height sensor (i.e. the sensor which measure the distance between the road and the chassis), steering wheel sensor (such sensor is used not only to steer the vehicle, but also to check whether the driver might be asleep). Further: pressure sensor or seat belt sensor (used e.g. for checking the number of passengers in a vehicle), weight sensor (to measure the weight of the vehicle, very important for trucks so that they don't drive on roads where they are not allowed to), compressed air sensors in the compressed air system in buses and trucks, altitude meter (usually used as a parameter for the engine control, but could also be used as an addition/correction to the altitude coordinate in a three dimensional positioning system), exhaust-gas sensor, exhaust gas recirculation triggering, soot sensor, NOX and Cox sensor, turbocharger triggering and intake and exhaust valve triggering, braking systems sensors, e.g. for ABS (anti-lock braking system), EPS (electric power steering), door lock sensors, air bag sensors, rain sensors, gear shift sensors and transmission speed sensors, electronic battery sensors, tire pressure sensor, fluid (gas, oil, cooling) level sensors. Some further examples of sensors are: radar, radar detector, sonar, depth gauge, pitch detector, visibility detector, etc.

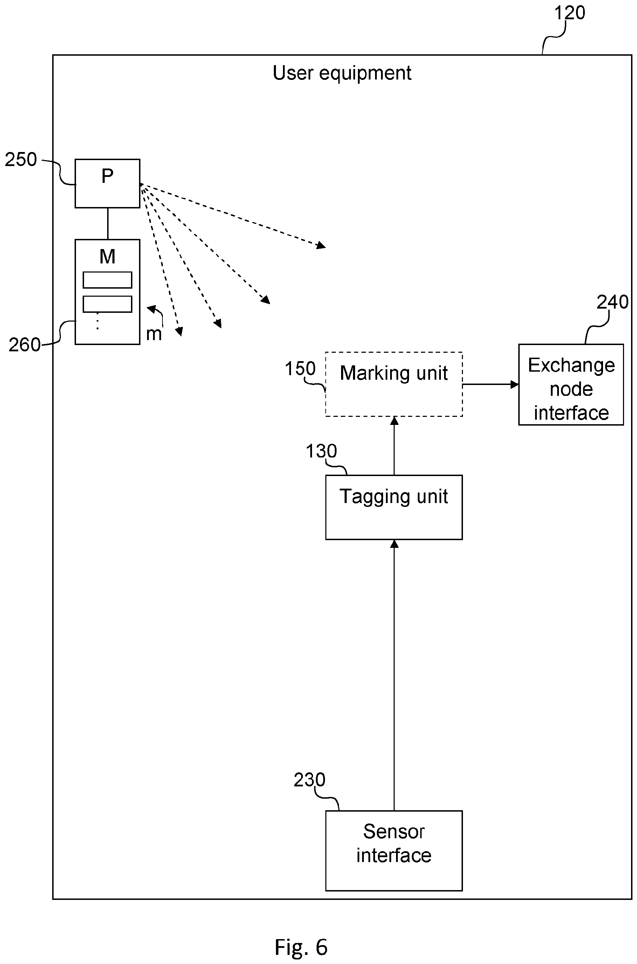

Fig. 6 shows an illustrative example of an embodiment of a UE 120 in a communication network configured to enable distribution, and rewarding of sensor data. The UE comprises a sensor interface 230 configured to receive sensor data from a sensor 110. The UE 120 may be identifiable via an ID, where the ID may be associated with the UE 120. The UE comprises a tagging unit 130 configured to tag the received sensor data with the ID. The UE comprises an exchange node interface 240 configured to transmit the received sensor data to a sensor data exchange node 100.

In an embodiment the UE 120 may be a virtual node. As a virtual node the UE 120 may be located in the communications network, at an operators computer center, as a cloud service, not limiting other physical or virtual locations.

In an embodiment the UE 120 may be equipped with a Subscriber Identity Module (SIM). The ID may be associated with the SIM.A SIM (subscriber identity module) may be a physical SIM-unit or a soft SIM and can be exemplified by ISIM (IP Multimedia Services Identity Module), USIM (Universal Subscriber Identity Module), MCIM (machine-to-machine communications identity module), and DLUSIM (downloadable USIM).

The ID may also be represented by a MAC-address (media access control), an IP-address (Internet Protocol), SIP id (Session Initiation Protocol), e-mail address, ISDN-number (Integrated Services Digital Network), MSISDN-number (Mobile Subscriber ISDN Number), registration number, not limiting to other similar identifications suitable for identifying a subscriber.

In an embodiment a tag of the received sensor data may comprise a marking such that the use of the received sensor data becomes traceable enabling a subscriber associated with the ID or SIM to trace the use and deployment of the received sensor data. The marking may be performed by a marking unit 150.

In an embodiment a transmission condition may be applied to the transmitted received sensor data. The transmission condition may identify at least one of: a limiting condition for further transmission of the received sensor data to at least one data user 140 in an identified group of data users 140, a limiting condition for further transmission of the received sensor data to at least one usage type in an identified group of usage types of sensor data. The transmission condition may be indicated at the reception of the received sensor data, or indicated in said acceptance stored in an association database 160.

In an embodiment the UE 120 may be configured to transmit a tracking request to the received sensor data exchange node 100, and receive a response to the tracking request which may include information indicating usage of the received sensor data, used by the data processing nodes 140. The UE 120 may further receive information indicating deployment or further transmission of the received sensor data.

In an embodiment a vehicle 170 or vessel 280 may contain a UE 120, such that the UE 120 is implemented in a vehicle 270 or vessel 280. Depending of the size of the vehicle 270 or vessel 280, it may comprise from a single or a few sensors, up to hundreds or more sensors. Depending on the vehicle 270 or vessel 280 a suitable configuration of a UE 120 together with a sensor data exchange node 100 may be selected. The UE 120 may as well be integrated with the sensor data exchange node 100.

Looking at Fig. 4 and 6. The sensor data exchange node 100 and the UE 120 described above may be implemented, by means of program modules of a respective computer program comprising code means which, when run by processors "P" 250 causes the sensor data exchange node 100 and the UE 120 to perform the above-described actions. The processors P 250 may comprise a single Central Processing Unit (CPU), or could comprise two or more processing units. For example, the processors P 250 may include general purpose microprocessors, instruction set processors and/or related chips sets and/or special purpose microprocessors such as Application Specific Integrated Circuits (ASICs). The processors P 250 may also comprise a storage for caching purposes.

Each computer program may be carried by computer program products "M" 260 in the sensor data exchange node 100 and the UE 120, shown in Fig. 1, 4, 5, 6, et al, in the form of memories having a computer readable medium and being connected to the processor P. Each computer program product M 260 or memory thus comprises a computer readable medium on which the computer program is stored e.g. in the form of computer program modules "m". For example, the memories M 260 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the sensor data exchange node 100 and the UE 120.

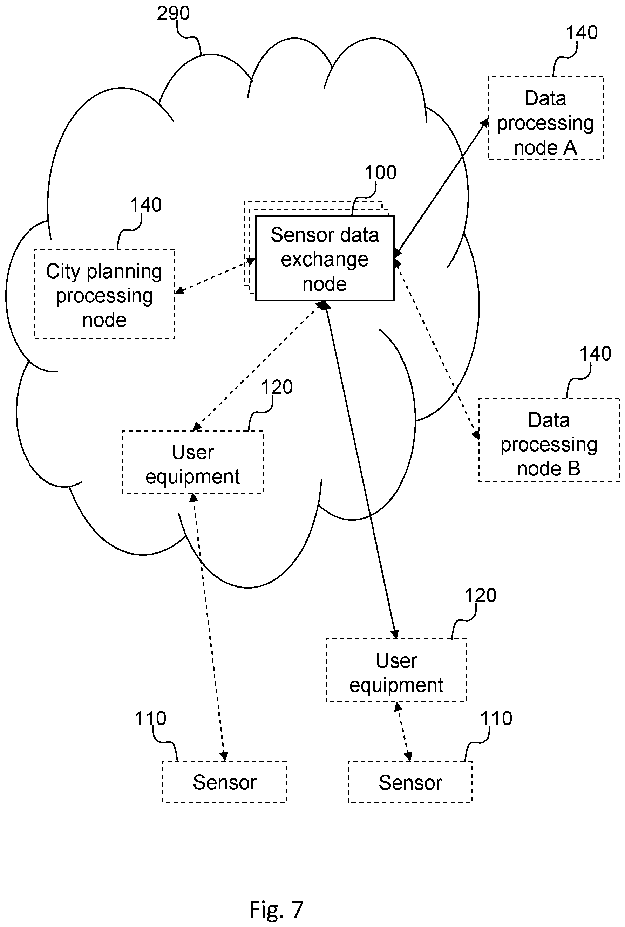

Fig. 7 illustrates an example of optional embodiment of the solution at least partly located in a shared environment 290. The shared environment may be for example a network operator site, a cloud, a cloud type based solution. The sensor data exchange node 100 may be located in the shared environment 290. In a large scale solution or in a distributed solution, the sensor data exchange node 100 may be clustered. The UE 120 may also be located in the shared environment 290, for example as a physical unit, or virtualized. Furthermore, a data processing node, such as the data processing node 140 or the city planning processing node 140 may be for example as well be located in the shared environment 290.

While the solution has been described with reference to specific exemplary embodiments, the description is generally only intended to illustrate the inventive concept and should not be taken as limiting the scope of the solution. For example, the terms "sensor data exchange node", "UE" (user equipment) and "data processing node" have been used throughout this description, although any other corresponding nodes, functions, and/or parameters could also be used having the features and characteristics described here. The solution is defined by the appended claims.

## Claims

1. A method for use in a sensor data exchange node (100) in a communication network, the method comprising:
- receiving (A1) sensor data from a User Equipment, UE, (120),
- tagging the sensor data with an ID, by a tagging unit (130) of the sensor data exchange node (100), wherein the ID is created by the sensor data exchange node (100) and wherein the ID is associated with the UE (120),
- transmitting (A3) the tagged sensor data to a data processing node (140),
- receiving (A4) a value assessment of the sensor data from the data processing node (140),
- determining (A5) a reward, based on the received value assessment, by a reward unit (200),
- storing (A6) the determination of the reward in a reward database (210).

2. The method according to claim 1, wherein
- the sensor data includes information for authenticating the UE (120), wherein:
- the authentication of the UE (120) is based on the ID,
- the ID is a unique identifier identifying a subscription and a method of rewarding, and
- an association between the ID and the subscription is stored in an association database (160), and wherein the sensor data and the ID of the sensor data are watermarked such that use of the sensor data becomes traceable enabling a subscriber to trace the use and deployment of the sensor data, and authenticity of the tag, the sensor data, and the traceability can be verified by the subscriber.

3. A sensor data exchange node (100) for use in a communication network, the sensor data exchange node (100) comprising:
- a User Equipment, UE, interface (170) configured to receive sensor data from a UE (120),
- a tagging unit (130) configured to tag the sensor data with an ID, wherein the ID is created by the sensor data exchange node (100) and wherein the ID is associated with the UE (120),
- a data processing interface (180) configured to:
transmit the tagged sensor data to a data processing node (140), and
receive a value assessment of the sensor data from the data processing node (140),
- a reward unit (200) configured to determine a reward based on the received value assessment,
- a reward database (210) configured to store the determined reward.

4. The sensor data exchange node (100) according to claim 3, wherein
- the sensor data includes information for authenticating the UE (120), wherein:
- the authentication of the UE (120) is based on the ID,
- the ID is a unique identifier identifying a subscription and a method of rewarding, and
- an association between the ID and the subscription is stored in an association database (160), and wherein the sensor data and the ID of the sensor data are watermarked such that use of the sensor data becomes traceable enabling a subscriber to trace the use and deployment of the sensor data, and authenticity of the tag, the sensor data, and the traceability can be verified by the subscriber.

5. A vehicle (270) or a vessel (280) containing the sensor data exchange node (100) according to claim 3 or 4.

6. A computer readable medium storing a computer program comprising instructions which, when executed by a computer, cause the computer to perform the method according to any of claims 1-2.

## Patentansprüche

1. Verfahren zur Verwendung in einem Sensordatenaustauschknoten (100) in einem Kommunikationsnetzwerk, wobei das Verfahren Folgendes umfasst:
- Empfangen (A1) von Sensordaten von einem Benutzergerät (User Equipment - UE) (120),
- Markieren der Sensordaten mit einer ID durch eine Markierungseinheit (130) des Sensordatenaustauschknotens (100), wobei die ID durch den Sensordatenaustauschknoten (100) erzeugt wird und wobei die ID dem UE (120) zugeordnet ist,
- Übertragen (A3) der markierten Sensordaten an einen Datenverarbeitungsknoten (140),
- Empfangen (A4) einer Wertermittlung der Sensordaten von dem Datenverarbeitungsknoten (140),
- Bestimmen (A5) einer Belohnung basierend auf der empfangenen Wertermittlung durch eine Belohnungseinheit (200),
- Speichern (A6) der Bestimmung der Belohnung in einer Belohnungsdatenbank (210).

2. Verfahren nach Anspruch 1, wobei
- die Sensordaten Informationen zum Authentifizieren des UE (120) enthalten, wobei:
- die Authentifizierung des UE (120) auf der ID basiert,
- die ID eine eindeutige Kennung ist, die ein Abonnement und ein Verfahren zum Belohnen identifiziert, und
- eine Zuordnung zwischen der ID und dem Abonnement in einer Zuordnungsdatenbank (160) gespeichert wird und wobei die Sensordaten und die ID der Sensordaten mit einem Wasserzeichen versehen sind, so dass die Verwendung der Sensordaten rückverfolgbar wird, was es dem Abonnenten ermöglicht, die Verwendung und die Bereitstellung der Sensordaten zu verfolgen, und die Authentizität der Markierung, der Sensordaten und der Rückverfolgbarkeit kann durch den Abonnenten überprüft werden.

3. Sensordatenaustauschknoten (100) zur Verwendung in einem Kommunikationsnetzwerk, wobei der Sensordatenaustauschknoten (100) Folgendes umfasst:
- eine Benutzergerät(UE)-Schnittstelle (170), die konfiguriert ist, um Sensordaten von einem UE (120) zu empfangen,
- eine Markierungseinheit (130), die konfiguriert ist, um die Sensordaten mit einer ID zu markieren, wobei die ID von dem Sensordatenaustauschknoten (100) erzeugt wird und wobei die ID dem UE (120) zugeordnet ist,
- eine Datenverarbeitungsschnittstelle (180), die konfiguriert ist, um:
die markierten Sensordaten an einen Datenverarbeitungsknoten (140) zu übertragen und
eine Wertermittlung der Sensordaten von dem Datenverarbeitungsknoten (140) zu empfangen,
- eine Belohnungseinheit (200), die konfiguriert ist, um eine Belohnung basierend auf der empfangenen Wertermittlung zu bestimmen,
- eine Belohnungsdatenbank (210), die konfiguriert ist, um die bestimmte Belohnung zu speichern.

4. Sensordatenaustauschknoten (100) nach Anspruch 3, wobei
- die Sensordaten Informationen zum Authentifizieren des UE (120) enthalten, wobei:
- die Authentifizierung des UE (120) auf der ID basiert,
- die ID eine eindeutige Kennung ist, die ein Abonnement und ein Verfahren zum Belohnen identifiziert, und
- eine Zuordnung zwischen der ID und dem Abonnement in einer Zuordnungsdatenbank (160) gespeichert wird und wobei die Sensordaten und die ID der Sensordaten mit einem Wasserzeichen versehen sind, so dass die Verwendung der Sensordaten rückverfolgbar wird, was es dem Abonnenten ermöglicht, die Verwendung und die Bereitstellung der Sensordaten zu verfolgen, und die Authentizität der Markierung, der Sensordaten und der Rückverfolgbarkeit kann durch den Abonnenten überprüft werden.

5. Landfahrzeug (270) oder Wasserfahrzeug (280), das den Sensordatenaustauschknoten (100) nach Anspruch 3 oder 4 beinhaltet.

6. Computerlesbares Medium, das ein Computerprogramm speichert, das Anweisungen umfasst, die, wenn sie von einem Computer ausgeführt werden, den Computer veranlassen, das Verfahren nach einem der Ansprüche 1-2 durchzuführen.

## Revendications

1. Procédé à utiliser dans un nœud d'échange de données de capteur (100) dans un réseau de communication, le procédé comprenant :
- la réception (A1) de données de capteur provenant d'un équipement utilisateur, UE, (120),
- le marquage des données de capteur avec un identifiant, par une unité de marquage (130) du nœud d'échange de données de capteur (100), dans lequel l'identifiant est créé par le nœud d'échange de données de capteur (100) et dans lequel l'identifiant est associé à l'UE (120),
- la transmission (A3) des données de capteur marquées à un nœud de traitement de données (140),
- la réception (A4) d'une estimation de valeur des données de capteur à partir du nœud de traitement données (140),
- la détermination (A5) d'une récompense, sur la base de la valeur d'estimation reçue, par une unité de récompense (200),
- le stockage (A6) de la détermination de la récompense dans une base de données de récompense (210).

2. Procédé selon la revendication 1, dans lequel
- le capteur de données comporte des informations permettant d'identifier l'UE (120), dans lequel :
- l'authentification de l'UE (120) est basée sur l'identifiant,
- l'identifiant est un identifiant unique identifiant un abonnement et un procédé de récompense, et
- une association entre l'identifiant et l'abonnement est stockée dans une base de données d'association (160), et dans lequel les données de capteur et l'identifiant des données de capteur sont mis en filigrane de sorte que l'utilisation des données de capteur devient traçable, permettant à un abonné de tracer l'utilisation et le déploiement des données de capteur, et que l'authenticité de la marque, les données de capteur et la traçabilité peuvent être vérifiés par l'abonné.

3. Nœud d'échange de données de capteur (100) à utiliser dans un réseau de communication, le nœud d'échange de données de capteur (100) comprenant :
- une interface d'équipement utilisateur, UE, (170) conçue pour recevoir des données de capteur provenant d'un UE (120),
- une unité de marquage (130) conçue pour marquer les données de capteur avec un identifiant, dans lequel l'identifiant est créé par le nœud d'échange de données de capteur (100) et dans lequel l'identifiant est associé à l'UE (120),
- une interface de traitement de données (180) conçue pour :
transmettre les données de capteur marquées à un nœud de traitement de données (140), et
recevoir une estimation de valeur des données de capteur provenant du nœud de traitement de données (140),
- une unité de récompense (200) conçue pour déterminer une récompense sur la base de l'estimation de valeur reçue,
- une base de données de récompense (210) conçue pour stocker la récompense déterminée.

4. Nœud d'échange de données de capteur (100) selon la revendication 3, dans lequel
- les données de capteur comportent des informations permettant d'authentifier l'UE (120), dans lequel :
- l'authentification de l'UE (120) est basée sur l'identifiant,
- l'identifiant est un identifiant unique identifiant un abonnement et un procédé de récompense, et
- une association entre l'identifiant et l'abonnement est stockée dans une base de données d'association (160), et dans lequel les données de capteur et l'identifiant des données de capteur sont mis en filigrane de sorte que l'utilisation des données de capteur devient traçable, permettant à un abonné de tracer l'utilisation et le déploiement des données de capteur, et que l'authenticité de la marque, les données de capteur et la traçabilité peuvent être vérifiés par l'abonné.

5. Véhicule (270) ou récipient (280) contenant le nœud d'échange de données de capteur (100) selon la revendication 3 ou 4.

6. Support lisible par ordinateur stockant un programme d'ordinateur comprenant des instructions qui, lorsqu'elles sont exécutées par un ordinateur, amènent l'ordinateur à mettre en œuvre le procédé selon l'une quelconque des revendications 1 à 2.
